(19) Europäisches Patentamt
European Patent Office
Office européen des brevets

(11) **EP 4 417 593 A1**

(12) **EUROPEAN PATENT APPLICATION**

(43) Date of publication:
**21.08.2024 Bulletin 2024/34**

(21) Application number: **23157245.4**

(22) Date of filing: **17.02.2023**

(51) International Patent Classification (IPC):
*C05B 7/00* (2006.01)  *C01C 1/24* (2006.01)
*C01C 1/28* (2006.01)  *C05C 1/00* (2006.01)
*C05C 3/00* (2006.01)  *C05C 9/00* (2006.01)
*C05G 5/12* (2020.01)

(52) Cooperative Patent Classification (CPC):
**C05C 3/00; C01C 1/24; C01C 1/28; C05B 7/00;
C05C 1/00; C05C 9/00; C05G 5/12; C25B 1/02;
C25B 1/22**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **H2-SPHERE GmbH
78467 Konstanz (DE)**

(72) Inventor: **Dold, Bernhard
78467 Konstanz (DE)**

(74) Representative: **Hoffmann Eitle
Patent- und Rechtsanwälte PartmbB
Arabellastraße 30
81925 München (DE)**

(54) **METHOD OF CONVERTING PYRITE INTO FERTILIZER**

(57)    The present invention relates to a method of converting pyrite into green fertilizer in an energetically selfsustained process. This is achieved by a method according to the present invention comprising the following steps:

(a) oxidation of a material comprising pyrite to obtain $SO_2$ gas;

(b) separation of the $SO_2$ gas;

(c) utilization of $SO_2$ gas from step (b) to generate $H_2$ gas and $H_2SO_4$ via a $SO_2$-depolarized electrolyzer (SDE) process or sulfur-iodine-cycle (S-I-cycle) process;

(d) reaction of the $H_2$ gas from step (c) with $N_2$ gas to produce $NH_3$ via Haber-Bosch process or electrochemical $NH_3$ synthesis;

(e) reaction of the $H_2SO_4$ from step (c) with $NH_3$ from step (d) to produce $(NH_4)_2SO_4$.

EP 4 417 593 A1

**Description**

## TECHNICAL FIELD

The invention relates to a method of converting pyrite into fertilizer in an energetically self-sustained process.

## TECHNICAL BACKGROUND

In 2022, with the Ukrainian war and the increasing global effects of climate change and environmental pollution, the western world decided to increase the speed of decarbonization of their industries and search for replacement technologies to be independent from fossil fuels and their suppliers. Green hydrogen (i.e., hydrogen produced by carbon free energy sources) is the most promising energy vector seen for the future to reach decarbonization and the climate goals. Additionally, the metal mining industry encounters more and more difficulties to open new mines due to the associated environmental pollution of their operations, producing a potential bottleneck in future metal supply due to the predicted increase in demand of metals for the decarbonization of the global industrial processes.

Pyrite is the most common sulfide mineral in the earth crust. Other important sulfide ore minerals include chalcopyrite, molybdenite, sphalerite, galena, and pentlandite. When these minerals are exposed to weathering at the Earth's surface, be it through natural processes or a result of mining activities, they react with oxygen in air in the presence of water to form drainage (so-called acid mine drainage (AMD) formation), causing severe environmental pollution.

Roasting of sulfide minerals, and pyrite in particular, was applied in the last century to produce sulfuric acid, but when desulfurization of fossil fuels became the main source for sulfuric acid production, the last pyrite mine stopped operation in the 1950s in the Iberian Pyritic Belt.

Thus, pyrite and other sulfide minerals are today mainly seen as an economically worthless materials, producing environmental hazards such as AMD.

One of the side effects of the current industrial and energetic transition is the increased demand for metals to produce the necessary energy vector and their industrial application (e.g., increased copper demand due to electrification of the transport sector). This will lead to increased mining activities around the globe with the associated mine waste production and environmental pollutions, such as AMD.

In view thereof, there is an increasing demand to find an environmentally friendlier use of pyrite (and other sulfide minerals) to avoid the formation of acid mine drainage and other environmental hazards.

Outotec discloses a method for the production of concentrated (93-100%) sulfuric acid (see U.S. Pat. No. 7,794,685 B2). The method includes the use of $SO_2$ gas to produce $H_2$ gas via sulfur-iodine-cycle (S-I-cycle) or hybrid sulfur cycle (HyS-cycle), which are known thermochemical water-splitting processes. The employed $SO_2$ gas may originate from sulfur combustion or may be by-product of a sulfide smelter or roaster process.

Thermochemical water-splitting cycles were the focus of research over the past 50 years. In these operations, $SO_2$ is required as base reagent, which together with water is used to produce $H_2$ gas and diluted $H_2SO_4$. This process has the advantage that its theoretical energy requirement is only 14% of the energy demand for, e.g., water-splitting by electrolysis (0.17 vs 1.23 V). An overview of the different processes is given in U.S. Pat. No. 7,794,685 B2. Currently, the sulfur-iodine-cycle (S-I-cycle) and the hybrid sulfur cycle (HyS-cycle) are the most promising candidates for industrial application. The hybrid sulfur cycle (HyS-cycle) makes use of a $SO_2$-depolarized electrolyzer (SDE) and is described in the U.S. Pat. No. 4,412,895. A schematic description of a SDE is given in Fig. 1 of this document. The S-I-cycle, which is also called the general atomics process ("GA-process"), is described, for example, in U.S. Pat. No. 4,089,940.

These two processes involve the generation of diluted sulfuric acid, which is not a commercially useful product, because it is difficult to handle and to transport due to its highly corrosive character.

U.S. Pat. No. 7,794,685 B2 tries to overcome the problem of formation of diluted sulfuric acid by concentrating the same to 93-100% sulfuric acid. For this purpose, part of the $SO_2$ stream (about 50%) is used to oxidize $SO_2$ to $SO_3$, which is then used to reach commercial concentrations (93-100%) of the sulfuric acid after several evaporation steps. However, with this method only about 50% of the $SO_2$-stream can be used for hydrogen production, thereby loosing important hydrogen potential. Additionally, the handling and transport of $H_2$ gas involves risks due to its potentially explosive character and thus requires adequate logistics.

## BRIEF DESCRIPTION OF THE DRAWINGS

[Fig. 1] Fig. 1 shows $H_2$ gas production via a $SO_2$-depolarized electrolyzer (SDE) process.

[Fig. 2] Fig. 2 shows a schematic flow sheet of the presently claimed method.

[Fig. 3] Fig. 3 shows a schematic flow sheet of a specific embodiment according to the presently claimed method.

## SUMMARY OF THE INVENTION

### Technical Problem

In view of the foregoing, there still is a demand for finding an environmentally friendlier way of using pyrite and other sulfide minerals, which mainly represent hazardous minerals in metal mine waste, to produce industrially valuable products via an optimized and efficient process.

### Solution to Problem

The present inventor has unexpectedly found that green $(NH_4)_2SO_4$ can be produced in an energetically self-sustained process from a material comprising pyrite. In this context, "green $(NH_4)_2SO_4$" means $(NH_4)_2SO_4$ produced without significant $CO_2$ emissions.

Ammonium sulfate is an inorganic salt with a number of commercial uses, whereby the most common use is as a fertilizer. Ammonium sulfate is made by treating ammonia with sulfuric acid:

$$2\ NH_3 + H_2SO_4 \rightarrow (NH_4)_2SO_4$$

Sulfuric acid and ammonia are the most-produced chemicals worldwide in industrial processes, and are mainly employed for fertilizer production, such as $(NH_4)_2SO_4$. The world production of ammonia and sulfuric acid in 2021 is estimated to be 150 million metric tons and 260 million metric tons, respectively. Their production is directly linked to the fossil fuel economy and usually involves a high energy demand. The emission of $CO_2$ from ammonia production alone are estimated at 2.07 t $CO_2$ eq/t $NH_3$, which represents 1.5% of the global anthropogenic $CO_2$ emissions.

The production of $NH_3$ has a more than 100 years long history with the Haber-Bosch process, which is the standard approach for ammonia production. The process converts atmospheric nitrogen ($N_2$) to ammonia ($NH_3$) by reaction with hydrogen ($H_2$) using a metal catalyst under high temperatures and pressures:

$$N_2 + 3\ H_2 \rightarrow 2\ NH_3 \quad \Delta H° = -\ 91.8\ kJ/mol$$

Though this reaction is exothermic (i.e. it releases energy, albeit not very much), it results in a decrease in entropy, which is the central reason why it is very challenging to carry out.

Furthermore, the process requires large amounts of hydrogen gas. Water-splitting by electrolysis is the standard path to produce hydrogen needed for ammonia production. Alkaline Electrolysis (AEL) or Proton Exchange Membrane Electrolysis (PEM) are the standard techniques, whereby AEL has been used at industrial scale for more than 100 years, while PEM is the latest technology with several years of industrial application. The large amounts of energy required for the $H_2$ gas production usually are covered by natural gas (grey hydrogen) or nuclear energy (pink hydrogen).

In summary it can be said that today's $(NH_4)_2SO_4$ production, and fertilizer production in general, is extremely $CO_2$ emission rich due to the required hydrogen and sulfuric acid production.

The everlasting trend towards a decarbonized industry will have the side effect that there will be a lack of sulfuric acid, as most of today's sulfuric acid is produced by desulfurization of fossil fuels like gas, oil, and coal.

The present invention overcomes the above problems by providing a method of converting pyrite into fertilizer, comprising the following steps:

(a) oxidation of a material comprising pyrite to obtain $SO_2$ gas;
(b) separation of the $SO_2$ gas;
(c) utilization of $SO_2$ gas from step (b) to generate $H_2$ gas and $H_2SO_4$ via a $SO_2$-depolarized electrolyzer (SDE) process or a sulfur-iodine-cycle (S-I-cycle) process;
(d) reaction of the $H_2$ gas from step (c) with $N_2$ gas to produce $NH_3$ via the Haber-Bosch process or electrochemical $NH_3$ synthesis;
(e) reaction of the $H_2SO_4$ from step (c) with $NH_3$ from step (d) to produce $(NH_4)_2SO_4$.

### Effects of the invention

The method of the present invention makes use of the exothermic oxidation of the pyrite-containing material in step (a), which not only has the capacity to cover the energy needed for the $H_2$ gas production in step (c), but also for the $NH_3$ synthesis in step (d). Therefore, this method allows for the production of green $(NH_4)_2SO_4$, i.e. the production

of $(NH_4)_2SO_4$ without the emission of $CO_2$. In particular, step (a) is exothermic and thus liberates heat which can be used to power the further steps (c) and/or (d). In this context, the heat may be fully or partially used for the production of electricity. Thereby, the method of the present invention allows for the replacement of $CO_2$ emission intense industrial processes by an emission free process. The final product of the process is green $(NH_4)_2SO_4$, which finds application in a number of commercial uses, such as fertilizer, insecticides, herbicides and/or fungicides. This is the basis to feed the growing world population also in future with these materials.

The mass balance of the reactions indicates that this process produces sufficient ammonia to neutralize 539t of the produced sulfuric acid to produce $(NH_4)_2SO_4$. The remainder of the sulfuric acid may be neutralized with additional green ammonia for $(NH_4)_2SO_4$ production and/or may be further concentrated and/or may be used for converting iron oxide resulting from the oxidation of the material comprising pyrite into iron sulfate. In this context, "green ammonia" means ammonia produced without significant $CO_2$ emissions. Excess heat liberated in the roaster may be utilized for concentrating the sulfuric acid.

Additionally, problems of handling and transporting gaseous or liquid hydrogen and highly corrosive sulfuric acid or other waste products are completely avoided by the claimed method, as all produced intermediates and side products are consumed for the production of $(NH_4)_2SO_4$ (except for the excess $N_2$-stream, which is harmless and thus can be released into the atmosphere).

## DETAILED DESCRIPTION

The present invention relates to a method of converting pyrite into fertilizer, comprising the following steps:

(a) oxidation of a material comprising pyrite to obtain $SO_2$ gas;
(b) separation of the $SO_2$ gas;
(c) utilization of $SO_2$ gas from step (b) to generate $H_2$ gas and $H_2SO_4$ via a $SO_2$-depolarized electrolyzer (SDE) process or a sulfur-iodine-cycle (S-I-cycle) process;
(d) reaction of the $H_2$ gas from step (c) with $N_2$ gas to produce $NH_3$ via the Haber-Bosch process or electrochemical $NH_3$ synthesis;
(e) reaction of the $H_2SO_4$ from step (c) with $NH_3$ from step (d) to produce $(NH_4)_2SO_4$.

The method includes the production of $SO_2$ gas via exothermic oxidation of a pyrite-containing material. Usually, this step is performed in a sulfide roaster or smelter.

The exothermic oxidation of pyrite plays a crucial rule to produce green hydrogen without the need of an external energy source. When used in the traditional manner, thermochemical processes (S-I cycle or SDE) employ $SO_2$ gas that is produced by the energy-demanding decomposition of sulfuric acid (Eq. 1).

$$2\,H_2SO_4 \rightarrow 2\,SO_2 + 2\,H_2O + O_2 \qquad \text{Equation 1}$$

In contrast thereto, the $SO_2$ gas used in step (c) of the claimed method is obtained by the roasting or smelting of material comprising pyrite in step (a) of the claimed method (Eq. 2).

$$4\,FeS_2 + 11\,O_2 \rightarrow 2\,Fe_2O_3 + 8\,SO_2 \qquad \text{Equation 2}$$

Preferably, the material comprising pyrite originates from the treatment of mine waste associated with sulfide metal mining, the desulfurization of ore streams in metal and/or the desulfurization in coal mining. This is particularly advantageous from the viewpoint of environmental friendliness, because it prevents and/or remediates environmental pollution.

The material comprising pyrite optionally comprises further sulfide-minerals, such as chalcopyrite ($CuFeS_2$), bornite ($Cu_5FeS_4$), enargite ($Cu_3AsS_4$), chalcocite ($Cu_2S$), molybdenite ($MoS_2$), sphalerite ($ZnS$), galena ($PbS$), pentlandite (($Fe,Ni)_9S_8$), acanthite ($Ag_2S$), pyrrhotite ($Fe_{1-x}S$), millerite ($NiS$), covellite ($CuS$), realgar ($AsS$), orpiment ($As_2S_3$), stibnite ($Sb_2S_3$), and/or marcasite ($FeS_2$).

From the viewpoint of overall efficiency, the material used in step (a) of the claimed method preferably comprises >62% by mass, more preferably >90% by mass of pyrite. Common methods, such as froth flotation, can be used to concentrate the pyrite-containing material. A pre-concentration of the pyrite-containing material is particularly preferable from the standpoint of reaching an energetically self-sustained roasting process. The higher the concentration of pyrite, the more $SO_2$ gas, and in turn $(NH_4)_2SO_4$, may be generated via the present method.

The oxidation in step (a) is preferably performed at a temperature of 600°C-1000°C. Optionally, the temperature may be in the range of 700-900°C or 800-900°C, which are preferred in view of obtaining an energetically auto-sustained roasting process.

The oxidation in step (a) may be performed using air as oxygen source. The efficiency of the oxidation reaction in step (a) may be increased by using oxygen enriched air or pure oxygen.

Preferably, $O_2$ obtained by air fractionation is used for the pyrite oxidation in the step (a). Doing so has the effect of $N_2$ being obtained as side product that can be used for $NH_3$ generation in step (d). Thereby, the need for separately purifying $N_2$ for the production of $NH_3$ in step (d) is obviated.

Aside from $SO_2$, the oxidation in step (a) generates $Fe_2O_3/Fe_3O_4$ (see Eq. 2 above). In one embodiment, part of the sulfuric acid generated in step (c) is used together with these oxides to produce iron sulfate. This makes possible the complete conversion of the pyrite in the pyrite-containing material into green products, in line with the circular economy principles. The higher the pyrite concentration in the pyrite-containing material the higher the conversion rate of the starting materials into green products.

In step (b) the $SO_2$ gas is separated from the off-gas generated in the roaster or smelter used for the oxidation in step (a).

Preferably, the oxidation in step (a) takes place in the presence of air as oxygen source. The introduced air delivers the oxygen needed for the generation of $SO_2$ gas (see Eq. 2 above). Since air is mainly composed of $N_2$ gas, the off-gas generated in the roaster or smelter used for the oxidation in step (a) will contain $SO_2$ gas and $N_2$ gas in such a case.

The off-gas containing both, $SO_2$ gas and $N_2$ gas, is preferably subjected to gas cleaning and separation of the $SO_2$ from the $N_2$ in step (b). Moreover, the $N_2$ preferably also is separated from the off-gas generated in the roaster or smelter used for the oxidation in step (a). The purification and separation of both, the $SO_2$ and the $N_2$, is beneficial for improving the efficiency of the follow-up processing.

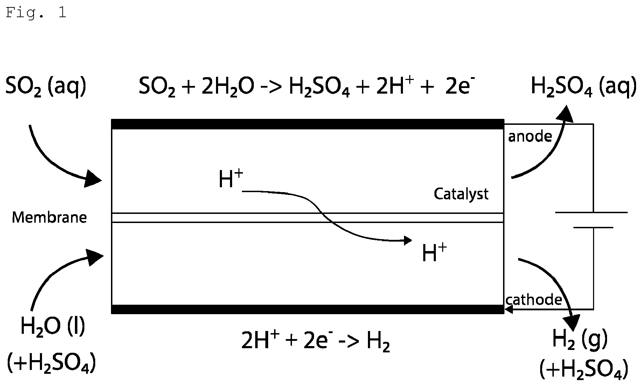

In step (c), the separated $SO_2$ is transferred to a $SO_2$-depolarized electrolyzer (SDE) process as shown in Fig. 1 or to a S-I cycle process, whereby $H_2$ gas and $H_2SO_4$ are generated.

Preferably >30% of the $SO_2$, more preferably >50% of the $SO_2$, even more preferably >70% of the $SO_2$, even more preferably >90% of the $SO_2$ used in step (c) originates from the oxidation of pyrite.

Optionally, the burning of elementary sulfur, burning of $H_2S$, and/or $SO_2$ enrichment and separation from industrial processes can be employed as further sources of $SO_2$ gas used in step (c).

The concentration of the $H_2SO_4$ generated in step (c) usually is in the range of 10-90%, but may also be in the range of 10-80%, 10-70%, 20-70%, 30-60% or 30-50% by mass.

Optionally, a part of the $H_2SO_4$ generated in step (c) can be further concentrated. Preferably, excess heat liberated in the roaster through the exothermic oxidation of the pyrite-containing material in step (a) is used to provide energy needed for the concentration of the $H_2SO_4$ generated in step (c) to produce concentrated $H_2SO_4$.

The concentrated $H_2SO_4$ may be used together with the iron oxide obtained in step (a) to produce iron sulfate.

Alternatively, the concentrated $H_2SO_4$ can be used to produce phosphoric acid, e.g., by reaction with apatite. The phosphoric acid may then be used to produce phosphate fertilizers, such as ammonium phosphate $((NH_4)_3PO_4)$ or calcium dihydrogen phosphate $(Ca(H_2PO_4)_2)$.

Optionally, a part of the $H_2SO_4$ generated in step (c) may be directly used to produce other sulfate fertilizers, such as $MgSO_4$.

In step (d), the hydrogen produced by the SDE or S-I-cycle process is subjected to reaction with $N_2$ gas to produce $NH_3$ via the Haber-Bosch process or through electrochemical $NH_3$ synthesis (Eq. 3).

$$3H_2 + N_2 -> 2\,NH_3 \qquad \text{Equation 3}$$

Preferably, $N_2$ obtained by air fractionation is used for the synthesis of $NH_3$ in step (d). This makes it possible to simultaneously produce $O_2$ for use in step (a) and $N_2$ for use in step (d) and to thereby simplify the overall process structure and to make it more efficient.

In step (e), the $NH_3$ produced in step (d) and the $H_2SO_4$ produced in step (c) are reacted with each other to produce ammonium sulfate $((NH_4)_2SO_4)$ (Eq. 4).

$$2\,NH_3 + H_2SO_4 -> (NH_4)_2SO_4 \qquad \text{Equation 4}$$

If required, the $(NH_4)_2SO_4$ produced in step (e) can be dried to obtain granular $(NH_4)_2SO_4$. The drying process can be performed by a water evaporation step.

The $NH_3$ produced in step (d) may take the form of gaseous $NH_3$, which can be fed directly into the $H_2SO_4$ in step (e).

This is particularly preferable if the introduction of additional water is to be avoided.

Optionally, a part of the $NH_3$ produced in step (d) may be used to generate ammonium phosphate $(NH_4)_3PO_4$, ammonium nitrate $NH_4NO_3$, and/or urea $CO(NH_2)_2$.

The excess heat liberated in the roaster through the exothermic oxidation of the pyrite-containing material in step (a) is used to provide energy needed for the $H_2$ gas production via a SDE or a S-I-cycle process in step (c) and/or energy needed for the synthesis of $NH_3$ in step (d). If required, renewable energy sources (i.e., wind, solar, hydro) may be used as supplementary energy sources for step (c) and/or (d) in order to ensure that the overall process can be operated without net $CO_2$ emissions.

Additional renewable energy sources may also be used to produce green $H_2$ gas by the energetic convenient $H_2SO_4$ splitting via SDE. The $Fe_2O_3/Fe_3O_4$ oxides obtained in step (a) may be reduced by said green $H_2$ gas to elemental Fe and/or direct reduced iron (DRI).

In one embodiment, excess heat from step (a) is used for providing energy in the SDE process in step (c). Generally, the SDE process requires energy in the form of electricity. Accordingly, the excess heat may be converted into electric energy by appropriate means in case the SDE cycle process is used.

In another embodiment, excess heat from step (a) is used for providing energy in the S-I-cycle process in step (c). Since the S-I-cycle process mainly requires energy in the form of heat, the excess heat from step (a) may be directly used for the S-I-cycle process in step (c).

The excess heat from step (a) may also be used as energy source for the $NH_3$ synthesis in step (d).

Optionally, 40-80% of excess heat from step (a) is used for providing energy in the SDE or S-I-cycle process in step (c) and/or 20-60% of excess heat from step (a) is used for providing energy in the $NH_3$ synthesis in step (d).

The method of the invention combines

- the exothermic oxidation of pyrite-containing material with green $H_2$ gas production
- the reaction of the green $H_2$ with $N_2$ gas (preferably deriving from air used in the oxidation process in step (a)) to produce green $NH_3$ and
- the reaction of the green $NH_3$ with $H_2SO_4$ produced as by-product during the $H_2$ gas production to form green $(NH_4)_2SO_4$ (one of the most commonly utilized fertilizers)

in a single industrial process that employs a single mineral resource and can be carried out without net $CO_2$ emissions.

The produced fertilizer is in liquid form ready for delivery to the final consumer or can be dried to produce granular $(NH_4)_2SO_4$. The drying process can be performed by a water evaporation step. For the drying process, excess heat generated in step (a) may be used.

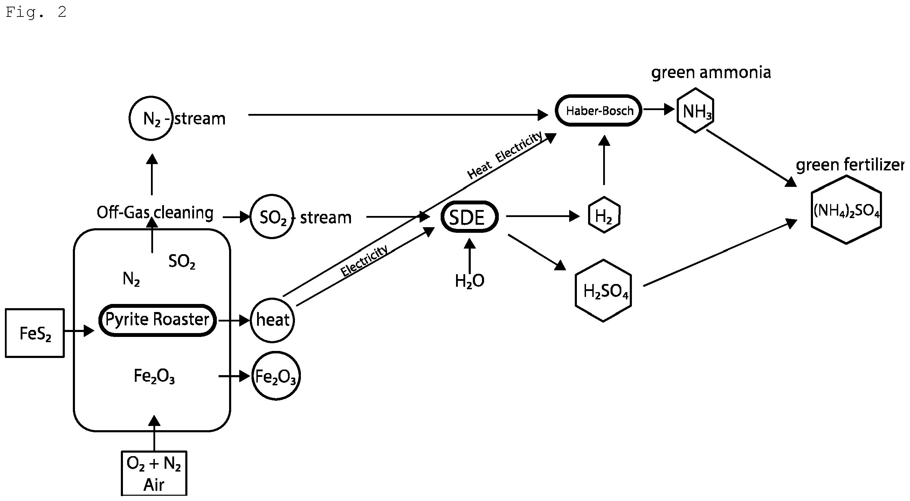

A schematic overview about the method described above is shown in Fig. 2.

**Specific embodiments**

The method according to the invention is described in more detail by means of the following embodiment.

In the oxidation step (a), 1000t per day of pyrite-containing material having a pyrite concentration of 100% is provided in a pyrite roaster in the presence of air and roasted at a temperature of 800-900°C.

**[Mass balance]**

Step (a) produces 1067t $SO_2$ gas and provides 2383t $N_2$ gas in form of off-gas.

Overall, the pyrite roasting releases 467t Fe in the form of 667t $Fe_2O_3$ (hematite) and 533t S in the form of 1067t $SO_2$.

The $SO_2$ gas is separated from the off-gas of step (a) (step (b)) and is used to produce 33t hydrogen via a SDE process with 1633t $H_2SO_4$ being obtained as secondary by-product (step (C)).

The produced hydrogen (33t) is reacted with 156t $N_2$ separated from the off-gas of step (a) (step (b)) to produce 189t $NH_3$ via Haber-Bosch process (step (d)).

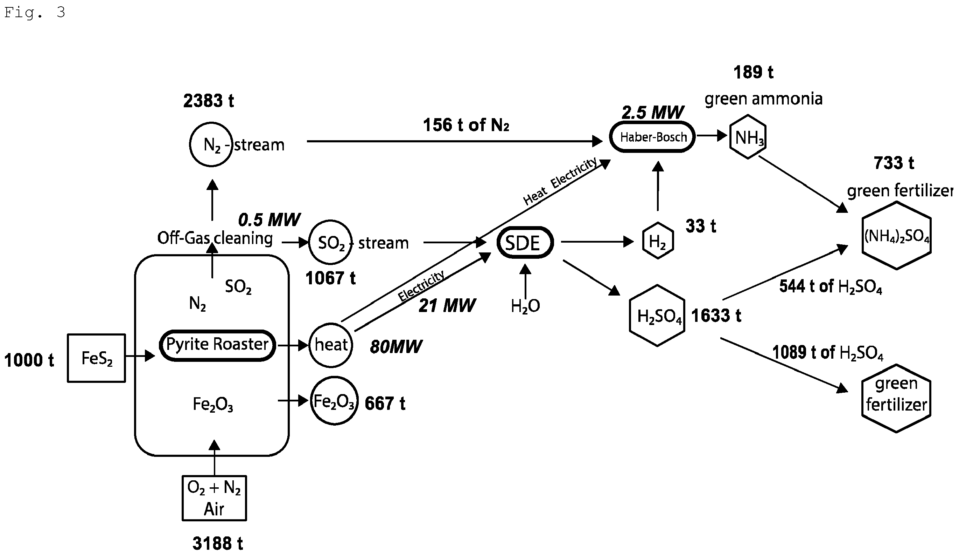

The $NH_3$ produced in step (d) is mixed with 544t of the $H_2SO_4$ obtained by step (c) to produce 733t of $(NH_4)_2SO_4$ in one industrial process from one mineral resource without net $CO_2$ emissions (see also Fig. 3).

The invention thus has the capacity to produce 33t $H_2$ per 1000t of 100% pyrite roasting (33 kg $H_2$ per 1t of pyrite), which is sufficient to transform 1/3 of the sulfuric acid into $(NH_4)_2SO_4$. The remainder of the sulfuric acid may be used to produce other sulfate fertilizers, such as $MgSO_4$, or may be further concentrated. The concentrated $H_2SO_4$ may be used together with the iron oxide obtained in step (a) to produce iron sulfate or may be used to produce phosphoric acid, which in turn may be used to produce further fertilizer, such as $(NH_4)_3PO_4$ or $Ca(H_2PO_4)_2$. To cover the hydrogen demand for all production lines, i.e. alternative fertilizer production, optionally renewable energy sources are used as supplementary energy sources.

**[Energy balance]**

Since pyrite contains predominantly $FeS_2$, formation of $Fe_2O_3$ (hematite) occurs during step (a), so that the reaction enthalpy can be taken as -1666 kJ/mol of $Fe_2O_3$ as a first estimate (Eq. 5).

```
2 FeS₂ + 11/2 O₂ → Fe₂O₃ + 4 SO₂                    Equation 5
ΔH = -1666 kJ/mol
```

This means that if 1000t/day of pyrite are introduced in step (a), about 48 mol/s of $Fe_2O_3$ will leave the roaster, which coincides with a heat release of about 80 MW. Since not all reactants are cooled to room temperature, a fraction of the total 80 MW will not be recovered.

Step (c) requires an energy amount of about 21 MW, depending on the exact reaction conditions.

Step (d) requires an energy amount of about 2.5 MW depending on the exact reaction conditions.

Since step (a) provides a theoretical overall heat release of 80 MW, the invention has the capacity to produce 33t $H_2$ per 1000t of 100% pyrite roasting per day (33 kg $H_2$ per 1t of pyrite) without the need of external energy sources, as most of the heat produced in step (a) can be used for providing energy in the SDE process in step (c) and/or $NH_3$ synthesis in step (d) (see also Fig. 3).

All together the method is energy balanced.

## Claims

1. A method of converting pyrite into fertilizer comprising the following steps:

   (a) oxidation of a material comprising pyrite to obtain $SO_2$ gas;
   (b) separation of the $SO_2$ gas;
   (c) utilization of $SO_2$ gas from step (b) to generate $H_2$ gas and $H_2SO_4$ via a $SO_2$-depolarized electrolyzer (SDE) process or a sulfur-iodine-cycle (S-I-cycle) process;
   (d) reaction of the $H_2$ gas from step (c) with $N_2$ gas to produce $NH_3$ via the Haber-Bosch process or electro-chemical $NH_3$ synthesis;
   (e) reaction of the $H_2SO_4$ from step (c) with $NH_3$ from step (d) to produce $(NH_4)_2SO_4$.

2. The method according to claim 1, wherein the material in step (a) further comprises other metal sulfide compounds, preferably selected from the group consisting of chalcopyrite ($CuFeS_2$), bornite ($Cu_3FeS_4$), enargite ($Cu_3AsS_4$), chalcocite ($Cu_2S$), molybdenite ($MoS_2$), sphalerite ($ZnS$), galena ($PbS$), pentlandite ($(Fe,Ni)_9S_8$), acanthite ($Ag_2S$), pyrrhotite ($Fe_{1-x}S$), millerite ($NiS$), covellite ($CuS$), realgar ($AsS$), orpiment ($As_2S_3$), stibnite ($Sb_2S_3$), marcasite ($FeS_2$).

3. The method according to claim 1 or 2, wherein the material comprising pyrite originates from the treatment of mine waste, the desulfurization of ore streams in metal and/or the desulfurization in coal mining.

4. The method according to any one of claims 1-3, wherein the material in step (a) comprises >62% by mass, preferably >90% by mass of pyrite.

5. The method according to any one of claims 1-4, wherein the $H_2SO_4$ obtained in step (c) has a concentration of 10 - 70% by mass.

6. The method according to any one of claims 1-5, wherein air is used as oxidizing agent in step (a), step (b) further includes separation of $N_2$ from the exhaust gas of step (a), and wherein the separated $N_2$ is used in step (d) to produce the $NH_3$.

7. The method according to any one of claims 1-6, wherein the $(NH_4)_2SO_4$ is dried to obtain granular $(NH_4)_2SO_4$.

8. The method according to any one of claims 1-7, wherein gaseous $NH_3$ is fed into the $H_2SO_4$ in step (e) .

9. The method according to any one of claims 1-8, wherein a part of the $NH_3$ produced in step (d) is used to generate ammonium phosphate $(NH_4)_3PO_4$, ammonium nitrate $NH_4NO_3$, and/or urea $CO(NH_2)_2$.

10. The method according to any one of claims 1-9, wherein a part of the $H_2SO_4$ produced in step (c) is used to generate

$MgSO_4$, phosphoric acid, ammonium phosphate $(NH_4)_3PO_4$, and/or calcium dihydrogen phosphate $Ca(H_2PO_4)_2$.

**11.** The method according to any one of claims 1-10, wherein excess heat generated in step (a) and optionally renewable energy sources are used to provide energy needed for the $H_2$ gas production via SDE or S-I-cycle process in step (c) and/or energy needed for the synthesis of $NH_3$ in step (d).

**12.** The method according to any one of claims 1-11, wherein >30% of the $SO_2$, preferably >50% of $SO_2$, more preferably >70% of $SO_2$, and even more preferably >90% of $SO_2$ used in step (c) originates from the oxidation of pyrite.

**13.** The method according to claim 12, wherein the burning of elementary sulfur, burning of $H_2S$, and/or $SO_2$ enrichment and separation from industrial processes represent further sources of $SO_2$ gas used in step (c).

**14.** The method according to any one of claims 1-13, wherein the oxidation in step (a) is performed at a temperature of 600°C - 1000°C.

**15.** The method according to any one of claims 1-14, wherein air is fractionated into $O_2$ and $N_2$, and the $O_2$ is used for the pyrite oxidation in step (a) and the $N_2$ is used for the $NH_3$ synthesis in step (d).

Fig. 1

$SO_2$ (aq)     $SO_2 + 2H_2O \rightarrow H_2SO_4 + 2H^+ + 2e^-$     $H_2SO_4$ (aq)

anode

$H^+$

Catalyst

Membrane

$H^+$

cathode

$H_2O$ (l)
$(+H_2SO_4)$

$2H^+ + 2e^- \rightarrow H_2$

$H_2$ (g)
$(+H_2SO_4)$

Fig. 2

EP 4 417 593 A1

Fig. 3

**2383 t**

N₂-stream

**156 t of N₂**

**189 t**
green ammonia

**2.5 MW**
Haber-Bosch → NH₃

**733 t**
green fertilizer

Heat  Electricity

**0.5 MW**
Off-Gas cleaning → SO₂- stream → SDE → H₂ **33 t**

**1067 t**

Electricity

**21 MW**

H₂O

(NH₄)₂SO₄

**544 t of H₂SO₄**

SO₂

N₂

**1000 t** FeS₂ → Pyrite Roaster → heat **80MW**

H₂SO₄ **1633 t**

Fe₂O₃

Fe₂O₃ **667 t**

**1089 t of H₂SO₄**

green
fertilizer

O₂ + N₂
Air

**3188 t**

EP 4 417 593 A1

Europäisches
Patentamt

European
Patent Office

Office européen
des brevets

## EUROPEAN SEARCH REPORT

**Application Number**

EP 23 15 7245

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ANU LOKKILUOTO ET AL: "Novel process concept for the production of Hand HSOby SO-depolarized electrolysis", ENVIRONMENT, DEVELOPMENT AND SUSTAINABILITY ; A MULTIDISCIPLINARY APPROACH TO THE THEORY AND PRACTICE OF SUSTAINABLE DEVELOPMENT, KLUWER ACADEMIC PUBLISHERS, DO, vol. 14, no. 4, 7 March 2012 (2012-03-07), pages 529-540, XP035067919, ISSN: 1573-2975, DOI: 10.1007/S10668-012-9342-Z * page 531, paragraph 3; figure 2 * * page 533, paragraph 5.1 * | 1-15 | INV. C05B7/00 C01C1/24 C01C1/28 C05C1/00 C05C3/00 C05C9/00 C05G5/12 |
| Y | September Article . ET AL: "Evaluation of the Exact Production Quantity of Nitrogen Fertilizer in Real-Time from any Particular Associated Gas Flare Volume in Nigeria", , 3 September 2017 (2017-09-03), pages 1-15, XP055973561, Retrieved from the Internet: URL:https://www.researchgate.net/figure/Ammonia-production-from-Natural-Gas-methane_fig1_350790016 [retrieved on 2022-10-21] * page 88, paragraph 1.1; figure 6 and 7 * | 1-15 | |
| A | WO 2013/006184 A1 (ORCHARD MATERIAL TECHNOLOGY LLC [US]; MCHUGH LAWRENCE F [US] ET AL.) 10 January 2013 (2013-01-10) * page 4, lines 7-17 * * page 14, lines 10-12 * | 1-15 | |

-/--

**TECHNICAL FIELDS SEARCHED (IPC)**

C05B
C01C
C05C
C05G

The present search report has been drawn up for all claims

| Place of search | Date of completion of the search | Examiner |
|---|---|---|
| The Hague | 6 July 2023 | Kampatsikas, Ioannis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

**EP 23 15 7245**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 7 794 685 B2 (OUTOTEC OYJ [FI]) 14 September 2010 (2010-09-14) * column 5, lines 26-28 * * column 6, lines 10-14 * ----- | 1-15 | |
| A | US 2017/252696 A1 (WOJAK BOGDAN [CA]) 7 September 2017 (2017-09-07) * figure 6(42)(45) * ----- | 1-15 | |
| A | CN 107 473 436 A (JIANGSU JIANGYA ENVIRONMENTAL TECH CO LTD) 15 December 2017 (2017-12-15) * paragraphs [0035] – [0040] * ----- | 1-15 | |
| A | REYES-BOZO LORENZO ET AL: "Assessment of the floatability of chalcopyrite, molybdenite and pyrite using biosolids and their main components as collectors for greening the froth flotation of copper sulphide ores", MINERALS ENGINEERING, vol. 64, 24 April 2014 (2014-04-24), pages 38-43, XP028876030, ISSN: 0892-6875, DOI: 10.1016/J.MINENG.2014.04.004 * page 39, paragraph 2.1 * ----- | 1-15 | |
| A | US 11 549 747 B2 (AIR LIQUIDE [FR] ET AL.) 10 January 2023 (2023-01-10) * column 2, lines 5-8 * ----- | 1-15 | TECHNICAL FIELDS SEARCHED (IPC) |

The present search report has been drawn up for all claims

| Place of search | Date of completion of the search | Examiner |
|---|---|---|
| The Hague | 6 July 2023 | Kampatsikas, Ioannis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 7245

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2023

| Patent document cited in search report | | Publication date | Patent family member(s) | | Publication date |
|---|---|---|---|---|---|
| WO 2013006184 | A1 | 10-01-2013 | US | 2012034154 A1 | 09-02-2012 |
| | | | WO | 2013006184 A1 | 10-01-2013 |
| US 7794685 | B2 | 14-09-2010 | BR | PI0806668 A2 | 27-05-2014 |
| | | | CA | 2673756 A1 | 24-07-2008 |
| | | | CN | 101583561 A | 18-11-2009 |
| | | | EA | 200900737 A1 | 26-02-2010 |
| | | | FI | 20070054 A | 20-07-2008 |
| | | | JO | 2623 B1 | 01-11-2011 |
| | | | JP | 5385153 B2 | 08-01-2014 |
| | | | JP | 2010516598 A | 20-05-2010 |
| | | | SA | 08290016 B1 | 22-11-2010 |
| | | | US | 2010061922 A1 | 11-03-2010 |
| | | | WO | 2008087252 A1 | 24-07-2008 |
| | | | ZA | 200904473 B | 28-04-2010 |
| US 2017252696 | A1 | 07-09-2017 | CA | 2931223 A1 | 22-08-2016 |
| | | | US | 2017252696 A1 | 07-09-2017 |
| | | | WO | 2017147681 A1 | 08-09-2017 |
| CN 107473436 | A | 15-12-2017 | NONE | | |
| US 11549747 | B2 | 10-01-2023 | CN | 111795544 A | 20-10-2020 |
| | | | JP | 2020173044 A | 22-10-2020 |
| | | | KR | 20200118766 A | 16-10-2020 |
| | | | SG | 10202002978T A | 27-11-2020 |
| | | | TW | M589780 U | 21-01-2020 |
| | | | TW | 202037865 A | 16-10-2020 |
| | | | US | 2020318898 A1 | 08-10-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7794685 B2
- US 4412895 A
- US 4089940 A